# EUROPEAN PATENT APPLICATION

(11) **EP 4 389 721 A1**
(43) Date of publication of application: **26.06.2024**
(21) Application number: 23216965.6
(22) Date of filing: 15.12.2023
(51) Int. Cl.: C04B 28/32

(54) **GEOPOLYMER AND METHOD OF PREPARATION THEREOF**

(30) Priority: 21.12.2022 IT 202200026208
(71) Applicant: Lu.an S.r.l., 00192 Roma (RM) (IT)
(72) Inventor: MAZZILLI, Mauro, 00192 Roma (RM) (IT)
(74) Representative: Ceccarelli, Ilaria

(57) **Abstract**

The present invention relates to a high-performance geopolymer for use as a building material, characterised by a low specific weight and excellent mechanical properties.

## Description

The present invention relates to a geopolymer and the method of preparation thereof. In particular, the invention relates to a high-performance geopolymer for use as a building material, characterised by a low specific weight and excellent mechanical properties.

In the field of building materials, cementitious compounds such as cement, concrete or cementitious mortar are well known.

In particular, in the sector of maintenance and installation of sundry plants and equipment, wherein cementitious compounds are used for different applications, field experience has shown the need to resolve various problems that some products on the market presently resolve only in part.

In particular, a known disadvantage of the commercially available cementitious compounds is the long curing times. For example, with respect to the laying of cables in ducting of electrical and data transmission networks external to sites, it is known that such ducting is particularly vulnerable to theft or damage, which generally occurs in the first hours close to installation, since commercial cementitious compounds require long curing times.

In greater detail, the known cementitious materials are characterised by a setting time of between 4 and 12 hours after laying.

Furthermore, it is known that the commercially available cementitious materials have a rather high specific weight. In particular, the known cementitious materials are characterised by a weight ranging between 1.9 kg and 2.4 kg per litre (weight and volume in reference to a ready-to-use cementitious composition, which will have to be mixed with water), which can prove disadvantageous for transport and for some applications.

In order to resolve the abovementioned weight problem, some "lightweight" cementitious materials, comprising within them "light" materials such as polystyrene or wood, have been proposed on the market. However, these types of products, though lighter than classic cementitious materials, do not maintain the same mechanical properties as the latter. In particular, the presently known "lightweight" products are characterised by a lower compressive and tensile strength compared to non-lightweight cementitious materials, thus resulting in inferior performance.

Furthermore, the presently known "lightweight" products are degradable in the presence of fire.

Finally, it is known that the known cementitious compositions are produced from separate components, in particular binders, inert materials, thickeners, flame retardants (components that are separate in part or in whole), which are mixed just before using the cement, together with the necessary amount of water. This has the disadvantage of rendering the preparation of the material prior to use longer and more complex.

In the light of the foregoing, it is apparent the need to provide new building materials capable of overcoming the abovementioned disadvantages of the known materials.

The solution according to the present invention fits into this context; it aims to provide a new composition for the preparation of a high-performance geopolymer. The composition according to the invention presents itself as a powder compound or a microgranular compound, preferably a powder with particles of a size less than or equal to 0.3 mm, to which water must be added for use.

The geopolymer according to the invention is characterised by a lower weight compared to the known cementitious materials and is advantageously capable of maintaining the mechanical properties characteristic of the known materials. In particular, the composition according to the present invention is characterised by a specific weight of about 0.95-1 Kg/l (kilograms/litre), to which an amount of water must be added, preferably an amount of 40 to 45% by weight relative to the weight of the composition. Therefore, the composition according to the present invention is characterised by a reduction in specific weight of about 30% to about 50% compared to the weight of the commonly used cementitious compositions.

Therefore, given the same performance in terms of mechanical properties, such as compressive and tensile strength, the geopolymer according to the present invention is much lighter than the known materials. This advantageously means a greater ease of use and easier transportability of the material compared to the known cementitious materials, without any loss of performance. Furthermore, compared to other "lightweight" compounds on the market which use, for example, polystyrene, wood and (flammable) thickened materials, the geopolymer according to the invention displays an adequate mechanical strength, as well as a considerable resistance to flames and to the propagation thereof.

The geopolymer according to the invention is further characterised by rapid setting and curing times. In fact, as confirmation of the rapid setting times, according to the present invention it has been observed that about 45/60 minutes after being laid, the geopolymer according to the invention can already be walked on (observed with an ambient temperature of about 10°C).

Furthermore, unlike the known cementitious products, wherein the components must be purchased separately from one another and mixed prior to use, the composition according to the present invention is produced so that it can be prepared with all the necessary components premixed in a single composition, and thus requires solely the addition of water for use. This is possible thanks to a process of preparing the composition that provides for removing the moisture present in the raw materials by vacuum dehumidification and replacing the aeriform element (air) with dehumidified nitrogen. This advantageously allows the coexistence of the raw materials, which are reactive to each other in the presence of H₂O, in a single package, while ensuring in any case the validity of the compound itself, as commercially required, for twelve months after preparation.

Once water has been added to the composition according to the invention, one obtains an easily workable mixture with a fluidity such as to make it easy to use both for casting and pumping.

Further advantages of the geopolymer according to the present invention are the following:
- thixotropy;
- high flame resistance with limited propagation of fumes and low or zero toxicity of the fumes, thanks to the presence of magnesium oxide, pumice and silica, which do not produce fumes, unlike the known commercial products that employ raw materials such as expanded polystyrene (or similar petroleum-derived materials, plastic thickeners...) or plant-based materials (such as cork or wood waste derivatives), which, due to the nature or heterogeneity of the compounds themselves, do not assure the absence of toxic or fireproof materials;
- lack of toxicity of the powder compound;
- low loss of transparency of the atmosphere also with high concentrations of fumes (low opalescence in case of smoke);
- non-polluting landfill-disposable product; at the end of its life, the material can be sent to a landfill site because it is not hazardous; furthermore, the material can also be reused for cropland or as a fertiliser with dispersion in soils, given the components thereof, produced by nature;
- deterrent to rodents;
- high yield in kilograms/litre;
- possibility of milling the final product, for example to create new housings and castings.

Therefore, the geopolymer according to the invention can prove particularly advantageous, for example, in the case of restoration work on constructions that poorly bear additional loads (such as flooring slabs or roofing) or constructions to be safeguarded in the presence of possible combustion phenomena, as well as the rapid rehabilitation of drivable passageways, which can be restored in a short time.

The following certifications have been obtained for the geopolymer according to the invention:
- lateral spread of flame according to standard ISO 5658-2:2006 + AMD 1:2011;
- fire classification of materials according to standard UNI EN 45545 - 2 :2015;
- compressive and tensile splitting strength according to standards UNI EN 12390-3:2019 and UNI EN 12390-6:2010.

Some of the known cementitious products presently used, compared to the geopolymer of the present invention:
- are heavier;
- are supplied in packages whose components must be premixed before being used with the addition of H₂O;
- do not have ease and rapidity of preparation;
- are not sufficiently repellent against the aggression of rodents;
- require a more burdensome end-of-life intervention;
- have lower fire resilience;
- have a higher fume emission.

The composition for the preparation of the geopolymer according to the invention is obtained by mixing, in suitable percentage amounts, several natural inorganic materials, derived through techniques and processes with a low energy consumption and low environmental impact.

In particular, the geopolymer according to the invention comprises, in suitable percentages:
- magnesium oxide (MgO);
- magnesium chloride (MgCl₂);
- gypsum, in particular gypsum comprising calcium sulphate, more in particular gypsum comprising calcium sulphate hemihydrate, such as, for example, alabaster gypsum and/or scagliola gypsum;
- deaerated pumice.

The abovementioned raw materials, besides having physicochemical characteristics such as to obtain the above-described advantageous functions of the product, also imply a low environmental impact, while ensuring the efficiency of the final mixture.

Magnesium oxide, derived from materials calcined at low temperatures, ensures high resistance to flame propagation and a low emission of fumes (it avoids the formation of highly opaque fumes), thus making the geopolymer fire resistant. Furthermore, magnesium oxide is normally also used in agriculture as a fertiliser, to create cosmetic products, in pharmacology as a supplement or in combination with other substances for therapeutic use, confirming the nontoxicity of the material.

Magnesium chloride and gypsum, in the suitable percentages according to the invention, make it possible to balance the setting and hardening times of the mortar obtained after the addition solely of water. In particular, gypsum, in the presence of water, reacts with the other components of the mixture.

Deaerated pumice, for example extracted from volcanic deposits, has the effect of lightening the mixture.

Furthermore, according to the present invention, the composition can further comprise expanded silica, which can be obtained, for example, from glass recycling or from volcanic deposits, and which has the advantage of acting as a deterrent against the aggression of rodents in general and further lightening the mixture.

It is therefore a specific object of the present invention a composition or mixture for the preparation of a geopolymer, said composition comprising or consisting of
magnesium oxide in a percentage ranging from 23% to 59%;
magnesium chloride in a percentage ranging from 9% to 15%;
gypsum, in particular gypsum comprising calcium sulphate, more in particular gypsum comprising calcium sulphate hemihydrate, such as, for example, alabaster gypsum and/or scagliola gypsum, in a percentage ranging from 10% to 25%;
deaerated pumice, obtained by subjecting the pumice to a treatment to reduce the moisture content to no more than 2%, i.e. a pumice with a percentage of moisture less than or equal to 2%, said deaerated pumice being in a percentage ranging from 10% to 55%;
said percentages being percentages by weight relative to the total weight of the composition or mixture. The composition according to the invention is a powder or microgranular mixture of the raw materials specified above and is suitable for being used as a cementitious material once mixed with water. In particular, the composition according to the present invention is a powdery mixture which, once mixed with water, thickens, as bonds are formed between the materials contained within the mixture itself, thereby obtaining the geopolymer according to the invention. In particular, the geopolymer according to the invention, obtained by mixing the elements listed above with water, is a magnesium oxychloride-based cement suitably dosed with the aim of rendering the mix long-lasting to ensure functional integrity. The formation of the geopolymer takes place thanks to the addition of water to the above-described composition, since water causes the compounds of the composition to react with one another.

The composition according to the present invention is preferably characterised by a powder with particles of a size less than or equal to 0.3 mm. This particle size advantageously enables a more homogeneous mixture to be obtained once the composition is mixed with water.

According to one embodiment of the present invention, the composition as defined above does not comprise water.

Furthermore, according to the present invention, said composition can be enclosed inside a hermetic container or a hermetically sealed package, for example a bag.

As mentioned above, the pumice introduced into the mixture already has from the outset a maximum moisture percentage of 2%. To prevent the moisture content from increasing during the various processes, it is subjected to a deaeration process during the step of mixing together with the other components.

Furthermore, according to the present invention, said composition can further comprise expanded silica, preferably in a percentage ranging from 2 to 4% by weight relative to the total weight of the composition. The expanded silica used in the composition according to the invention can be obtained directly from mines or from recycled glass, in particular expanded glass in microspheres, or from natural compounds such as pumice. The expanded silica contributes to making the composition lighter, since it has a low specific weight, and has the advantage of acting as a deterrent to rodents thanks to its high abrasive capacity.

Expanded silica is a compound comprising expanded silicon dioxide, for example thermically expanded, wherein said expanded silicon dioxide can be in the form of granules. For example, according to the present invention, said expanded silica can be a thermally expanded inorganic granular glass, for example obtained from recycled glass (such as, for example, bottles, glass receptacles, windowpanes, etc.) or obtained from volcanic deposits. More in particular, the expanded silica present in the composition according to the present invention preferably comprises an amount of silicon dioxide of from 70 to 75%. Furthermore, according to the present invention, the expanded silica, in addition to silicon dioxide, can comprise sodium oxide, for example from 10% to 15%, calcium oxide, for example from 7% to 11%, aluminium oxide, for example from 0.4% to 0.5%, magnesium oxide, for example from 0.4% to 0.5% and potassium oxide, for example from 0.4% to 0.5%, said percentages being percentages by weight relative to the total weight of the expanded silica.

According to a preferred embodiment of the present invention, said composition comprises or consists of
magnesium oxide in a percentage ranging from 23% to 59%;
magnesium chloride in a percentage ranging from 9% to 15%;
gypsum, in particular gypsum comprising calcium sulphate, more in particular gypsum comprising calcium sulphate hemihydrate, such as, for example, alabaster gypsum and/or scagliola gypsum, in a percentage ranging from 10% to 25%;
deaerated pumice, obtained by subjecting the pumice to a treatment to reduce the moisture content to no more than 2%, i.e. a pumice with a percentage of moisture less than or equal to 2%, said deaerated pumice being in a percentage ranging from 10% to 55%; expanded silica in a percentage ranging from 2% to 4%;

In particular, according to the present invention:
the magnesium oxide can be present in a percentage ranging from 30% to 45%;
the magnesium chloride can be present in a percentage ranging from 10% to 13%;
the gypsum can be present in a percentage ranging from 10% to 20%, for example from 12% to 20%;
the deaerated pumice can be present in a percentage ranging from 20% to 40%; and
the expanded silica, when present, can be present in a percentage ranging from 2% to 4%.

The composition according to the present invention can have a specific weight of 0.95 to 1 Kg/l (kilograms/litre), variable based on the apparent specific weight of the individual components.

Furthermore, according to the present invention, said composition can further comprise bentonite. In particular, the bentonite can be added as an agent to render the composition waterproof.

Preferably, the composition according to the present invention is characterised by a percentage of moisture of less than 2%.

A further object of the present invention is a geopolymer obtained from a composition as defined above.

In particular, the geopolymer according to the present invention is obtained by mixing the composition as defined above with water, preferably with an amount of water of between 40% and 45% by weight relative to the weight of the composition depending on the temperature, and then allowing the mixture obtained to dry for a suitable setting time.

The present invention further concerns a process for obtaining a composition as defined above, said process comprising or consisting of the following steps:
a) providing the following compounds:
   magnesium oxide;
   magnesium chloride;
   gypsum, wherein said gypsum is alabaster gypsum and/or scagliola gypsum;
   deaerated pumice, obtained by subjecting the pumice to a treatment to reduce the moisture content to no more than 2%, i.e. a pumice with a percentage of moisture less than or equal to 2%;
   wherein each compound is preferably characterised by a percentage of moisture of less than 2%;
b) mixing said compounds in any order to obtain a composition, according to the following percentages:
   magnesium oxide in a percentage by weight ranging from 23% to 59%,
   magnesium chloride in a percentage by weight ranging from 9% to 15%,
   gypsum in a percentage by weight ranging from 10% to 25%,
   deaerated pumice in a percentage by weight ranging from 10% to 55%,
   said percentages being percentages by weight relative to the total weight of the composition or mixture; and
   applying a vacuum to remove the air and moisture present; said mixing and application of a vacuum can be carried out, for example, in a cylindrical mill; step b) can be performed for every cycle of the duration of 15 minutes;
c) at the end of step b), introducing nitrogen so as to restore the aeriform part removed by vacuum;
d) packaging the composition obtained in step c) in a container, such as, for example, a bag, and hermetically sealing said container.

According to the present invention, said step a) can further comprise providing expanded silica and said step b) can comprise further mixing expanded silica in a percentage by weight ranging from 2% to 4%.

According to one embodiment of the present invention, in said step b) the compounds can be mixed in the following percentages:
magnesium oxide in a percentage ranging from 30% to 45%;
magnesium chloride in a percentage ranging from 10% to 13%;
gypsum in a percentage ranging from 10% to 20%, for example from 12 to 20%;
deaerated pumice in a percentage ranging from 20% to 40%;
and, optionally, expanded silica in a percentage ranging from 2% to 4%;
said percentages being percentages by weight relative to the total weight of the composition or mixture.

The present invention also relates to a process for obtaining a geopolymer, said process comprising or consisting of the following steps:
i) mixing a composition as defined above with water, said water being in a percentage by weight of from 40% to 45%, preferably 45%, relative to the weight of the composition, in order to obtain a mortar;
ii) forming the mortar into the desired shape, for example through the use of a mould;
iii) allowing it to dry for a setting time of from 40 minutes to 48 hours, in particular from 40 minutes to 60 minutes, to render said mortar walkable or from 48 hours to 60 hours to render it drivable.

According to the present invention, said steps i) and ii) are preferably carried out at a temperature comprised between +5°C and +35°C. If said steps i) and ii) are carried out at a temperature above 35°C, in said step i) a further amount of water can be added, in particular about 5% of water by weight relative to the weight of the initial composition.

The present invention will now be described, by way of illustration but not by way of limitation, according to a preferred embodiment thereof, with particular reference to the examples.

### Example 1. Process for preparing the composition according to the present invention.

A composition according to the present invention can be prepared according to the following process:
A) Carrying out a check on the moisture content of the raw materials using instruments adapted to detect the moisture content of every individual component of the mix. In particular, checking that the components have a moisture content no greater than 2%.
B) Checking the level of humidity in the work environment in which the mixing and bagging operations are carried out, by means of a local relative humidity meter. The work environment must show a level of relative humidity no greater than 60% (the environment is preferably conditioned by a suitable ambient dehumidification system).
C) Mixing the components:
   magnesium oxide, in a percentage ranging from 23% to 59%,
   magnesium chloride, in a percentage ranging from 9% to 15%
   gypsum, selected from alabaster gypsum and scagliola gypsum, in a percentage ranging from 10% to 25%;
   deaerated pumice, in a percentage ranging from 10% to 55%
   expanded silica, in a percentage ranging from 2% to 4%, wherein said percentages are percentages by weight relative to the weight of the composition;
   and applying a vacuum to remove the air and moisture present. In particular, the aforesaid components are mixed inside a cylindrical mill (equipment commonly used in the paint industry), in which mixing is performed by rotation and a vacuum is simultaneously applied to remove the air present and, consequently, any presence of moisture. The step of mixing and applying a vacuum preferably lasts about 15 minutes per cycle.
D) at the end of the mixing and vacuum step inside the mill, introducing nitrogen to restore the aeriform part removed by vacuum. Therefore, the presence of the aeriform part within the mix prevents the possibility that air with a high moisture content might pollute the compound.
E) packaging the composition in a specific bag by means of a suitable packaging system.

The present invention has been described by way of illustration and not by way of limitation, according to preferred embodiments thereof, but it is to be understood that variations and/or modifications can be introduced by the person skilled in the art without going outside the relevant scope of protection, as defined by the appended claims.

## Claims

1. Composition for the preparation of a geopolymer, said composition comprising or consisting of
magnesium oxide in a percentage ranging from 23% to 59%;
magnesium chloride in a percentage ranging from 9% to 15%;
gypsum, in particular gypsum comprising calcium sulphate, in a percentage ranging from 10% to 25%;
deaerated pumice, obtained by subjecting the pumice to a treatment to reduce the moisture content to no more than 2%, said deaerated pumice being in a percentage ranging from 10% to 55%;
said percentages being percentages by weight relative to the total weight of the composition.

2. Composition according to claim 1, wherein said composition is a powder or microgranular composition.

3. Composition according to claim 2, wherein said composition is a powder composition **characterised by** particles of a size less than or equal to 0.3mm.

4. Composition according to any one of the preceding claims, wherein said composition does not comprise water.

5. Composition according to any one of the preceding claims, said composition being enclosed in a hermetic container.

6. Composition according to any one of the preceding claims, wherein
the magnesium oxide is in a percentage ranging from 30% to 45%;
the magnesium chloride is in a percentage ranging from 10% to 13%;
the gypsum is in a percentage ranging from 10% to 20%, for example from 12% to 20%;
the deaerated pumice is in a percentage ranging from 20% to 40%.

7. Composition according to any one of the preceding claims, wherein said composition further comprises expanded silica, preferably in a percentage ranging from 2% to 4%.

8. Composition according to any one of the preceding claims, said composition having a specific weight of from 0.95 to 1 Kg/L.

9. Composition according to any one of the preceding claims, wherein said composition further comprises bentonite.

10. Composition according to any one of the preceding claims, said composition being **characterised by** a percentage of moisture of less than 2%.

11. Geopolymer obtained from a composition as defined in any one of the preceding claims.

12. Process for obtaining a composition as defined in any one of claims 1-10, said process comprising or consisting of the following steps:
a) providing the following compounds:
magnesium oxide;
magnesium chloride;
gypsum, in particular gypsum comprising calcium sulphate;
deaerated pumice, obtained by subjecting the pumice to a treatment to reduce the moisture content to no more than 2%;
wherein each compound is preferably **characterised by** a percentage of moisture of less than 2%;
b) mixing said compounds to obtain a composition, according to the following percentages:
magnesium oxide in a percentage by weight ranging from 23% to 59%,
magnesium chloride in a percentage by weight ranging from 9% to 15%,
gypsum in a percentage by weight ranging from 10% to 25%,
deaerated pumice in a percentage by weight ranging from 10% to 55%,
said percentages being percentages by weight relative to the total weight of the composition or mixture; and
applying a vacuum to remove the air and moisture present;
c) at the end of step b), introducing nitrogen in order to restore the aeriform part removed by vacuum;
d) packaging the composition obtained in the step c) in a container, such as, for example, a bag, and hermetically sealing said container.

13. Process according to claim 12, wherein said step a) further comprises providing expanded silica and said step b) further comprises mixing expanded silica in a percentage by weight ranging from 2% to 4%.

14. Process according to any one of claims 12-13, wherein in said step b) the compounds are mixed in the following percentages:
magnesium oxide in a percentage ranging from 30% to 45%;
magnesium chloride in a percentage ranging from 10% to 13%;
gypsum in a percentage ranging from 10% to 20%, for example from 12 to 20%;
deaerated pumice in a percentage ranging from 20% to 40%; and
optionally, expanded silica in a percentage ranging from 2% to 4%;
said percentages being percentages by weight relative to the total weight of the composition.

15. Process for obtaining a geopolymer, said process comprising or consisting of the following steps:
i) mixing a composition as defined in any one of the claims 1-10 with water, said water being in a percentage by weight of from 40% to 45%, preferably 45%, relative to the weight of the composition, in order to obtain a mortar;
ii) forming the mortar into the desired shape, for example using a mould;
iii) allowing it to dry for a setting time of from 40 minutes to 48 hours, in particular from 40 minutes to 60 minutes to render said mortar walkable or from 48 hours to 60 hours to render it drivable.
